# EUROPEAN PATENT APPLICATION

(11) **EP 2 508 088 A1**
(43) Date of publication of application: **10.10.2012**
(21) Application number: 11161353.5
(22) Date of filing: 06.04.2011
(51) Int. Cl.: A41C 5/00, A42C 1/02

(54) **Three-dimensional Shaped Textile Element and Method for the Manufacture of said Element**

(71) Applicant: Groz-Beckert KG, 72458 Albstadt (DE)
(72) Inventor: Schöller, Eric, 72459 Albstadt (DE); Wizemann, Gustav, 72469 Messsletten (DE); Moon Hichung Christopher, Seul (KR)
(74) Representative: Rüger, Barthelt & Abel

(57) **Abstract**

For the production of spatial textile articles (12) a base material with two or more layers is used, the two layers (16, 17) of said material exhibiting at least locally different shrinkage potentials. Then, during a suitable process, the shrinkage potential is released fully or in part due to thermal action, other physical action or chemical action, thus causing a spatial arching of the starting material and, in doing so, resulting in the manufacture of the desired textile article (12).

## Description

The invention relates to a method for the manufacture of a spatial, i.e., three-dimensional, shaped textile element, as well as to such a shaped element.

Textiles that need to be imparted with a desired spatial shape before being used are frequently employed in the garment industry and in other technological fields. For example, publication US 3,673,611 A discloses a method for the manufacture of hats, wherein a suitable moldable felt cloth containing polymer fibers is transformed into the desired spatial shape in a press and is fixed in this shape by thermal action. In doing so, the phenomenon enabling an easy plastic deformation of the polymer fibers in heated state is utilized, in which case the assumed form is retained after cooling. However, synthetic materials also display specific memory properties. When reheated, they frequently tend to return to their original form. If textiles that have been produced in this manner are washed hot and then exposed to hot air in a dryer, they may lose their desired form.

In addition, partially melted synthetic fibers in the felt may lead to inferior wearing properties or even to a lower porosity of the felt body. The latter plays a part when said felt body is used for the production of a composite material and is to be soaked in liquid plastic material or synthetic resin.

Publication EP 0 887 451 A2 discloses a warp knitted fabric that is used for the manufacture of brassieres. The warp knitted fabric consists of polyester threads that are processed by a first bar to result in a base structure. With the use of a second bar, elastic threads are introduced into the warp knit fabric in order to provide the textile with elasticity. During a subsequent heat treatment the material is placed on a mold and heated until the polyester threads shrink and the material assumes the shape prespecified by the mold.

Publication JP 2004-300593 A uses a similar concept which, however, is based on a fleece-like textile structure.

Furthermore, spatially structured non-wovens have been known from publication WO 00/29656. In order to produce a convoluted or zigzag felt material, appropriate thermoplastic fibers are sprayed on by means of a stream of hot air. These fibers deposit on the drum and adopt the surface form of said drum. By being stripped from the drum the desired honeycomb material is obtained.

It is the object of the invention to provide a concept that can be used to impart three-dimensional textile articles in an easy manner with a desired three-dimensional form, whereby the textile article reliably retains its shape during subsequent further processing or during use.

Furthermore, it is the object of the invention to provide an appropriate textile shaped element that meets these claims.

This object is achieved with the method in accordance with Claim 1 as well as with the shaped textile element in accordance with Claim 12.

The inventive method for the manufacture of a three-dimensional textile article is based on the superimposition of at least two textile layers that exhibit at least locally different shrinkage potentials. Furthermore, the inventive concept includes that the layers be mechanically connected between each other, whereupon the shrinking process is initiated. In doing so, at least regions of the two layers will contract in a two-dimensional manner. Inasmuch as the first, the second and optionally further layers contract differently, the textile article automatically develops a desired shape. The textile article assumes this shape voluntarily, as it were. It need not be feared that the article will again lose this shape during subsequent processing or use or treatment. On the contrary: If the shrinking process is initiated and performed by thermal action, a later reheating of the object cannot lead to the loss of the desired shape. In doing so, the method in accordance with the invention is fundamentally suitable for the manufacture of textiles that are to be worn such as hats, shoulder pads, brassieres, protectors (knee protectors, elbow protectors and the like), seat cushions or the like, as well as for the manufacture of technical objects including reinforcement textiles for plastic composite materials such as, e.g., seat shells, helmets, chassis components, machine components or the like.

Consequently, a three-dimensional textile article is any spatially shaped object that is made of filaments. These are arranged in more or less thick layers. In doing so, the term textile includes synthetic fibers as well as natural fibers, short fibers, long fibers, mineral fibers, hydrocarbon fibers, ceramic fibers, metallized fibers or the aforementioned type or metal fibers. The fibers may be made available as non-woven planar structures such as, for example, so-called only lengthwise oriented or only crosswise oriented rovings, or also as a non-woven fabric. However, they may also be arranged in the layers in the form of stitches, e.g., as a knit, a warp knit, or as a woven fabric, as a pile material with loop pile and/or cut pile, or be provided in another manner. Each textile layer may consist of filaments of a single material type or also of composite threads or also of a mixture of different threads.

The two or more layers that have been mechanically connected with each other exhibit at least locally different shrinkage potentials. In doing so, the shrinkage potential is a measure of the reduction of a selected section of an area of the affected layer when a shrinkage-triggering factor takes effect. Such a factor may be, for example, thermal action, the effect of radiation (e.g., UV radiation, IR radiation, microwave radiation), chemical action or also of time elapsed. For example, if the shrinkage potential is viewed as the decrease of the area relative to the original covered area, the non-shrinking textiles display a shrinkage potential of 0, whereas textiles that shrink to half their area during the shrinking process display a shrinkage potential of 50%. If, as opposed to this, the area increases slightly during the shrinking process, the shrinkage potential is negative (e.g., -10%). Within the framework of the invention, all shrinkage potentials, including shrinkage potentials that are equal to zero or smaller than zero, that, however, are at least locally different between the two or more layers, are taken into consideration.

A local difference of the shrinkage potentials is understood to mean that - at a viewed location of the textile element - superimposed layer sections displaying an expansion in both directions of the area, said expansion being greater than the thickness of the respective textile layer, exhibit different shrinkage potentials. The difference of the shrinkage potentials may relate to the extent of the respective shrinkage potentials and/or to the preferred orientation of the shrinkage potentials.

The two layers are mechanically connected with each other. The term mechanical connection includes all connections and types of connections that are achieved with filaments as the force-transferring means. These include, in particular, connections that are achieved by filaments that are partially transferred from the respective layers into the other layer. For example, the two layers may be connected with each other by means of a bonding (fiber entangling) process as has been known in felt production. The bonding process can be initiated or performed with the use of felting needles, by means of fluid jets, for example water jets, or other methods suitable for the production of felt. The layers are then connected with each other by filaments that have been rearranged by the bonding process in such a manner their one end is anchored in the one layer and their other end is anchored in the other layer. Physical and chemical processes may be used to strengthen the connection. For example, a treatment of the double-layer textile material with solvents, steam or the like may lead at least to a local adhesion of the filaments among each other, as has been known from the manufacture of fine synthetic non-wovens ("Alcantara"). Furthermore, the layers may be alternatively or additionally sewn to each other. Additional mechanical connecting techniques may be used, for example, namely the incorporation of mechanical connecting elements such as staples, for example.

The shrinking process may be initiated or performed by any physical or chemical action that enables the two textile layers to shrink (or swell) at different rates. Such physical actions may be the action of heat, the action of radiation, the action of electrical or magnetic fields or waves, or the action of other forms of energy. It is also possible to use chemical actions to initiate the shrinking process, for example the action of fluids that have a dissolving or swelling effect, the action of fluids that trigger chemical processes such as, for example, a cross-linking or convolution of polymer molecules. The chemical action may also result in a swelling (negative shrinkage) of the materials of at least one of the layers. Preferably, the actions that are used lead to a permanent change of area or volume such as, for example, sudden pressure changes that may lead to a puffing-up of the fibers that are involved. Actions may be used that utilize a memory effect of the textile fiber material that makes up one or both layers. For example, the fibers may be elongated so that their polymer chains are largely arranged parallel. If the polymer chains tend to again return into a more convoluted form due to a thermal effect, this is accompanied by a shrinking process that can be utilized in this case.

The shrinking process causes a spatial deformation of the textile that has been planar until then. The imparting of a spatial form may be performed on a larger textile web or on individually cut pieces. The shaping process may be aided by an exterior support mold that may optionally also fix the shape. The molding pressure of an exterior support mold, however, does not constitute the only shape-imparting factor. The shaping pressure can thus be kept lower than in conventional shaping processes, thus making it possible to maintain a larger pore volume in the textile element while the thickness of the material will be not or nearly not reduced.

Depending on the subsequent purpose of use, the open-pore three-dimensional textile article may be subsequently made into a garment, for example; or said textile may also be impregnated with synthetic resins or other plastic materials to produce a technical component, for example, a rearview mirror housing.

The shrinkage potential of each layer need not necessarily be equally great in both directions of the area, i.e., the textile layers need not necessarily be isotropic. For example, the fibers in one of the two layers, or also in both layers, may display a preferred orientation, thus enabling the setup of a preferred shrinking direction (anisotropy). Also this effect can be utilized for the targeted shaping of the shaped element by initiating the shrinking process. This is applicable in particular when, e.g., the shrinkable fibers in one layer display locally different preferred orientations. Referring to a textile web, the fibers may have a basic orientation in longitudinal direction of the web, for example, whereby a transverse orientation is predominant at selected points. In doing so, a shrinking of the web leads to a controlled transverse and longitudinal distortion and thus to a controlled formation of a nap pattern, for example.

Before or after initiating the shrinking process, it is possible to more strongly bond individual zones, e.g., edge areas, bending lines or the like, than the remaining material, for example, by locally applied high pressure and high temperature (heat-sealing process) in order to bind the layers of the textile element particularly tightly to each other outside the arching zones and/or to avoid local arching.

The method in accordance with the invention opens up a multitude of technical possibilities for the manufacture of spatial textile articles by utilizing locally different shrinkage potentials, said shrinkage potentials being arranged and dimensioned in such a manner that their release causes the planar two-dimensional structure to be transformed into the desired spatial form.

Details of embodiments of the invention are obvious from the claims, the description and the drawings. They show in
Fig. 1 a schematized perspective representation of a garment (brassiere) with spatially shaped cups;
Fig. 2 a sectional view of a detail of a cup of the garment in accordance with Fig. 1;
Fig. 3 a schematized representation of an enlarged detail of Fig. 2;
Figs. 4 through 6 a schematized longitudinal representation of the essential stages of the manufacture of a three-dimensional textile article;
Figs. 7 through 10 schematized representations of various structures of textile layers for the manufacture of a three-dimensional textile article;
Fig. 11 an alternative embodiment of a material for the manufacture of three-dimensional textile articles;
Figs. 12 and 13 a longitudinal section of triple-layer embodiments of the textile article in accordance with the invention prior to deformation;
Fig. 14 a plan view of a textile article exhibiting locally different shrinkage potentials;
Fig. 15 a perspective view, vertically in section, of a spatial fiber composite object;
Fig. 16 an enlarged view of a detail of the fiber composite object in accordance with Fig. 15;
Figs. 17 and 18 a schematic representation of the manufacturing steps for the production of the shaped element in accordance with the invention;
Fig. 19 a representation, longitudinally in section, of another embodiment of a three-dimensional textile article in accordance with the invention; and
Fig. 20 an exemplary embodiment of a textile web for the manufacture of a three-dimensional textile article exhibiting shrinkage potentials that are locally different in longitudinal and transverse directions.

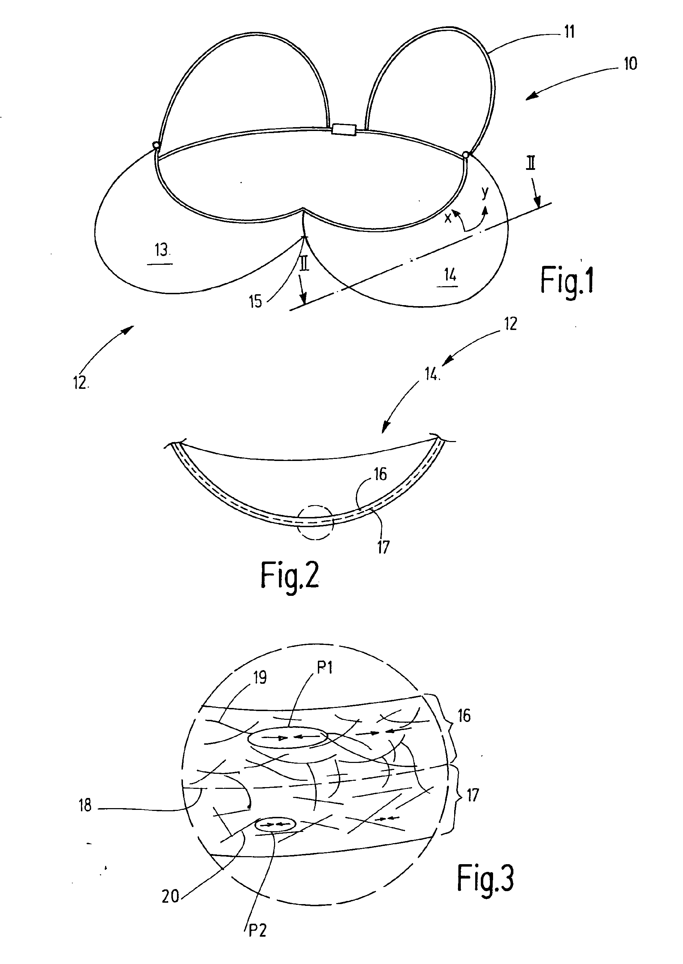

Fig. 1 shows a brassiere 10 comprising straps 11 and cups 13, 14 as the example of a three-dimensional textile article. These cups may be connected as one part or be connected to each other at a connecting point 15 by suitable connecting techniques such as, e.g., sewing (or, in the case of synthetic fibers, also welding). The description of cup 14 hereinafter applies equally to cup 13.

Cup 14 is three-dimensional, i.e., spatially shaped. Said cup looks like an arched hollow mold, i.e., it is curved in both surface directions X and Y, as is indicated in Fig. 1.

Fig. 2 represents a section along sectional line II-II of Fig. 1. As is obvious, cup 14 is made of a textile material that consists of two different layers, namely a first layer 16 and a second layer 17. The two layers 16, 17 are intimately connected with each other. In Fig. 3, a corresponding transition zone is indicated in a dashed line like a boundary surface 18. However, in this case, this is not a dividing surface on which layers 16, 17 could move relative to each other, but it is a connecting zone that connects the two layers 16, 17 with each other in a planar manner.

In the exemplary embodiment both layers 16, 17 are made of random-fiber non-woven structures. The individual fibers 19, 20 of the two layers 16, 17 thus form one non-woven, respectively, whereby the two non-wovens blend at the boundary surface 18.

Preferably, the first layer 16 has a greater shrinkage potential P1, while the second layer 17 has a smaller shrinkage potential P2. Referring to the textile article 12, the shrinkage potential has already been exhausted, thus producing the spatial hollow form of the textile article 12 or cup 14. In Fig. 3, the shrinkage potentials P1 and P2 are symbolized by different-length arrows that point at each other, whereby the length of the arrows is meant to illustrate the dimension of the shrinkage potential.

Due to the greater shrinkage potential of layer 16, the release of said shrinkage potential has resulted in a hollow arching of cup 14 on the part of layer 16.

For example, fibers 19, 20 may consist of different synthetic materials. It is also possible to produce each of layers 16 and/or 17 of a fiber mixtures, whereby the fiber mixture may contain shrinkable as well as non-shrinkable fibers, for example, a mixture of natural fibers and synthetic fibers. It is possible to achieve the different shrinkage properties of the fibers 19, 20 of the two layers 16, 17 with a different chemical composition of the fibers 19, 20. For example, the first layer 16 may consist in part or in full of polyamide fibers, while the second layer 17 consists predominantly of cotton fibers that do not shrink or that shrink less.

It is also possible to attribute the different shrinkage properties of the two layers 16, 17 to various physico-thermal pretreatments of the employed fibers. In doing so, the so-called elongation of the individual fibers may influence the shrinkage properties. For example, layer 16 may contain highly elongated fibers, while layer 17 may contain less-elongated fibers having the same or a different composition or consist of such fibers.

The release of the shrinkage potentials P1 and P2 of the two layers 16, 17 is accomplished, for example, by thermal treatment, whereby the textile article 12 is preferably uniformly heated, so that the shrinkage potentials P1, P2 of the two layers are exhausted. This ensures that subsequent heating of the textile article 12 - as may happen, for example, during washing and drying - does not lead to additional shape changes but that, rather, dimensional stability is given. This is expedient in particular in the case of textile articles 12 that are used as garments. However, it should be noted that it may also be imperative from the technical viewpoint that the initiation and performance of the shrinking process be only limited to certain zones of the textile article in order to effect there a spatial deformation, whereas other zones are not or less deformed and, optionally, additionally also retain a deformation potential. In this manner, it is possible, for example, to produce individual bulges or indentations on smooth base materials. If the materials is fixed later, e.g., by being soaked in hardening cast resin, the residual shrinkage capability of the remaining fibers no longer plays a detrimental role.

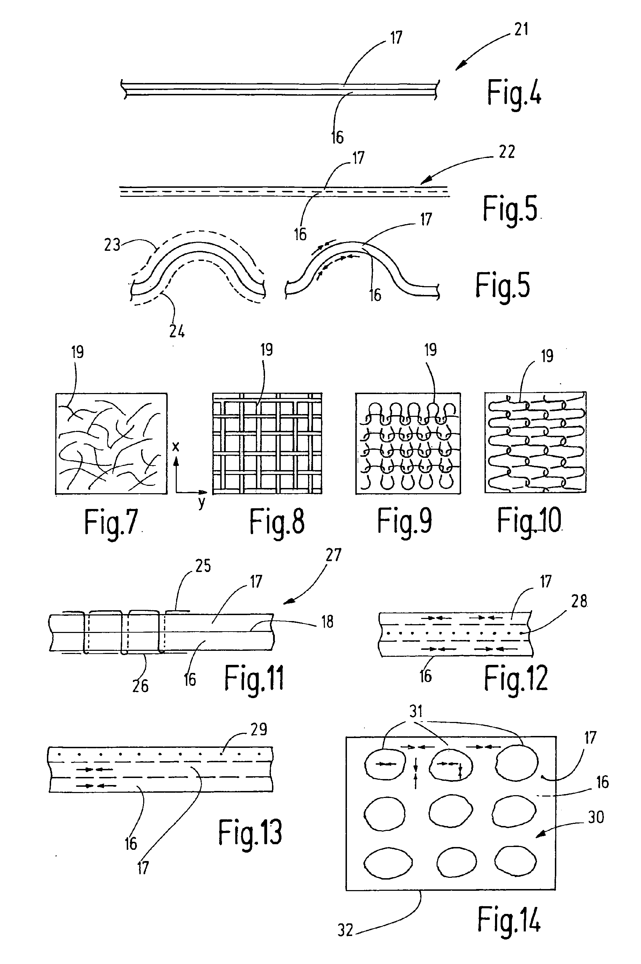

Fig. 4 shows a textile base material 21 comprising the two layers 16, 17 that initially are loosely superimposed. Again, this may be a random-fiber non-woven fabric in minimally bonded form, for example in the form of a loose non-woven material. During a subsequent process step the two layers 16, 17 are mechanically connected with each other, for example by needling with felting needles or water jets or the like. The still planar composite material 22 is obtained, wherein the two layers 16, 17 cannot be shifted in longitudinal nor in transverse directions relative to the resultant textile web but, rather, they are firmly bound to each other. This composite material 22 can be wound on a bale, for example, and be kept ready or it may be directly fed to another process.

Fig. 6 shows the further processing. This comprises mainly the initiation and performance of a shrinking process, wherein the two layers 16, 17 shrink in at least in one direction of the area, preferably in both directions X and Y of the area. In doing so, depending on the orientation of the filaments, it is possible to obtain a uniform shrinkage in X-direction and in Y-direction (i.e., longitudinally and transversely relative to the textile web), as well as, if desired, a different shrinkage in X-direction and Y-direction (isotropic or anisotropic shrinkage). This mainly depends on the orientation of the fibers as well as on the composition of the fibers.

The sections of the composite material 22 that are to be deformed may be separated, that means cut into pieces of a desired size, in order for them not to mutually prevent each other from deforming during the subsequent shrinking process. Alternatively, it is also possible to provide a one-part or two-part mold that acts as a support, the upper mold half 23 and the lower mold half 24 being shown in dashed lines in Fig. 6. However, the composite material 22 will deform automatically into the desired three-dimensional hollow shape under the effect of the shrinkage-triggering factor, for example, heat, UV radiation, pressure change or another form of energy. However, the mold halves 23, 24 can be used as a support to improve the dimensional stability, shape calibration, etc.

The hollow molds shown in Fig. 6 can be used for the manufacture of cups 13, 14, as is obvious from Fig. 1 or 2 herein.

In the previously described exemplary embodiment of a general textile preliminary element 12 that has been explained with reference to the example of a brassiere 10 it was assumed that both layers 16, 17 can consist of a felt-like or fleece-like material as is symbolically illustrated by the plan view of Fig. 7. Furthermore, it was also assumed that the individual filaments 19 and/or 20 do not have a preferred orientation, i.e., all X- and Y-orientations occur with the same frequency. This results in a uniform shrinkage potential in longitudinal direction and in transverse direction (X and Y) and thus in essentially semi-spherical hollow forms.

Such hollow forms can also be achieved when the first layer 16 and/or the second layer 17 are made of a woven material, as is symbolically indicated in Fig. 8. When layers 16 and/or 17 are made of a woven material, various weaving types may be used in order to achieve different shrinkage potentials in longitudinal direction and in transverse direction. The shown plain weave will result in the same shrinkage in the longitudinal and the transverse directions. Other weaves, e.g. twill, elements which contain more weft threads than warp threads (or contain more warp threads than weft threads) may exhibit different shrinkage potentials in the longitudinal direction and in the transverse direction. As a result of a specific local variation of the weave it is possible to achieve local shrinkage modifications and variations, e.g. in that the warp threads and the weft threads exhibit a different shrinkage potential. It is also possible to use multi-axial wovens to specifically control the shrinkage and deformation properties.

As is shown by Fig 9, layers 16 and/or 17 may also be configured as a knit material or, as in Fig. 10, as a warp knit material. Depending on the binding mode that is used, it is possible to achieve different shrinkage potentials in the longitudinal and transverse directions in this case. This is true, in particular, of the configuration of layers 16 and / or 17 as a knit material, whereby an appropriate pattern knitting machine can be used to knit local shrinkage potential patterns that may then transform into the corresponding spatial forms as the shrinking potential is being released.

Each of the said planar structures of Fig. 7 through Fig. 10 can be mechanically connected with another by means of a needling process as has been known from the production of felt. Large numbers of needles having rough flanks or flanks provided with barbs repeatedly puncture the layers 16, 17 and transfer a few filaments of one layer 16 into the other layer 17 and / or vice versa. Consequently, a layer assembly is being formed, said layer assembly displaying lasting quality and surviving the deformation process due to the release of the shrinkage potentials.

The connection of the layers 16, 17 to each other can be supported or replaced by a seam as shown in Fig. 11. In order to produce the seem, said figure shows threads 25, 26. Instead of the two-thread seam it is also possible to use one-thread seams or other connecting techniques that bind the layers 16, 17 to each other at points that are spatially close to each other (e.g., a distance of a few millimeters or centimeters). Stitch-knitting, also known under its brand name Malimo, is an eligible technology therefore. The release of the different shrinkage potentials of the two layers 16, 17 also accomplishes a controlled spatial deformation of the material 27 as in Fig. 11, even if there is no felting of the two layers 16, 17 on the boundary surface 17.

Fig. 12 shows another modification. An additional layer 28 is provided between the layers 16, 17, said layer 28 being neutral, for example, or also comprising its own shrinking material. In the present exemplary embodiment it is represented as a loose, minimally bonded interlayer that thus hardly inhibits the shrinking process. This layer may be needled together with the layers 16, 17 as a whole, whereby each of the layers 16, 17 may have any of the configurations that have been basically introduced in Figures 7 through 10 and previously discussed.

Fig. 13 shows another modification. The two layers 16, 17 are connected with a surface layer 29 that may be manufactured, for example, of a non-shrinking material in accordance with the principles as represented in Figures 7 through 10 and as previously explained. This modification may also be made of a material that will elongate or swell during the treatment causing the shrinkage of layers 16, 17.

Alternatively or additionally, the more strongly shrinking layer 16 may be provided with a surface layer that, again, may be composed in accordance with one of the principles illustrated in Figures 7 through 10 and that may be composed in accordance with the previously explained principles in order to increase the wearing comfort of the specific garment, for example. The mentioned additional layers 28, 29 as well as the not specifically shown layer on the inner layer 16 may be made of different materials which differ from the material(s) of layers 16, 17.

Fig. 14 shows a modified composite material 30 that is distinguished by locally different shrinkage potentials. The plan view of layer 17 indicates zones 31 that exhibit a reduced shrinkage potential. In between, there are one or more regions 32 that display an increased shrinkage potential.

The underlying layer 16 that is concealed by layer 17 may display an exactly opposite shrinkage potential distribution, i.e., a high shrinkage potential under zones 31 and a low shrinkage potential under region 32.

If, following the production of this composite material 30, the shrinkage potential is released - for example by heating the composite material 30 or, consistent with the appropriate triggering mechanism, by irradiation or chemical treatment - arched structures are formed on the so far planar composite material 30, said structures being of a durable quality.

The so-far described textile articles 12 are provided as open-pored air-permeable articles. However, each of the illustrated and/or described embodiments of the textile article 12 can be provided one side or on both sides with a film, a varnish or the like.

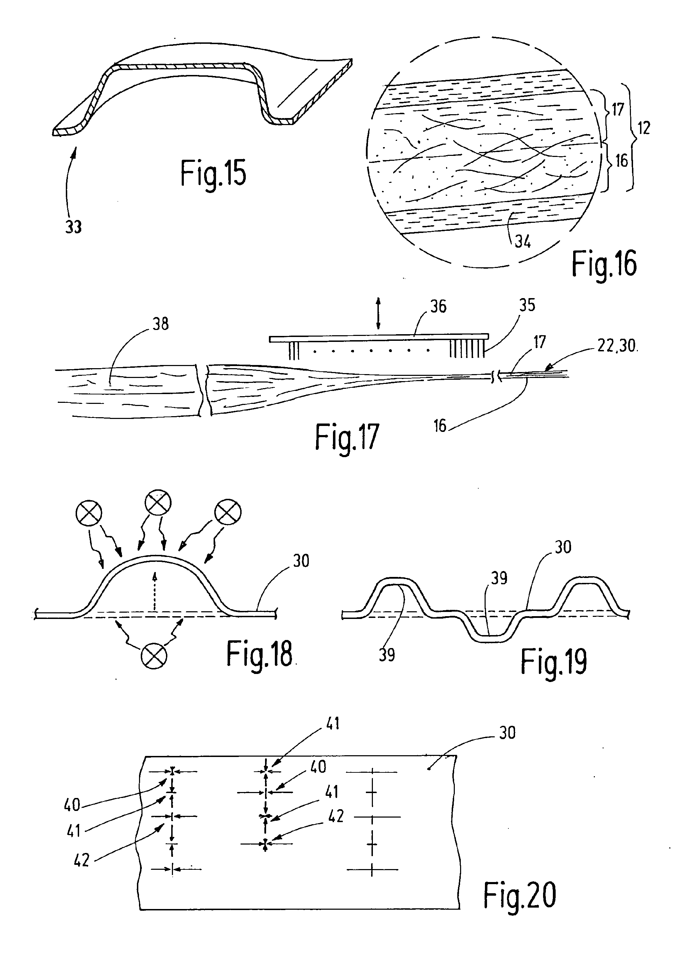

In addition, it is possible to continue to process the textile article 12, e.g., in connection with synthetic material, to produce a composite object 33 as is shown, for example, in Fig. 15. The composite object 33 is a spatial element that can be used, for example, as a housing shell, as a motor vehicle mirror housing or as a similar technical application. Fig. 16 shows a section of the wall structure. As is obvious, the textile article 12 consisting of the two layers 16, 17 is embedded in a matrix 34 of cured plastic material. The description provided hereinabove applies analogously to the textile article 12. As regards the plastic material 34, it is possible to use any plastic material that is capable of penetrating the textile article 12 and of solidifying. The plastic material may be of a thermoplastic or duroplastic nature.

Soaking and solidification may take place in a mold in which or on which the textile article 12 is placed. This mold preferably matches the interior or exterior form of the desired composite object 33. The textile article 12 has been transformed by the previous reforming process caused by (one-sided) shrinkage into a form that at least comes close to the desired form, so that said textile article can be placed without creases and minimal tension into or onto the mold.

Fig. 17 illustrates the manufacture of a composite material 22 or 30 with the use of a needle board 36 that is provided with felting needles 35. Said needle board performs an up-and-down oscillating movement in longitudinal direction of the felting needles 35, whereby, e.g., two loosely superimposed random-fiber non-woven fabrics 37, 38 are repeatedly punctured while said non-woven passes transversely to the oscillating movement of the needle board 36 under said board. The felting needles 35 puncturing the material cause a bonding of the fleece material. The resultant composite material 22 or 30 is a two-layer felt cloth. This cloth contains shrinkable fibers in both layers 16, 17, the random-fiber non-woven fabrics 37, 38 consisting or containing said fibers. For example, non-shrinkable ground fibers can be mixed with shrinkable fibers and thus be combined in the random-fiber non-woven fabrics 37, 38. If the content of shrinkable fibers in the random-fiber non-woven fabrics 37, 38 is different, the layers 16, 17 again exhibit different shrinkage potentials. The shrinkage potentials may be uniform or vary locally within the area of each layer 16, 17 if the content of shrinkable fibers in the random-fiber non-woven fabrics 37, 38 has been varied locally in an appropriate manner.

Due to the effect of the shrinkage-triggering factor, for example thermal radiation, the so-far planar felt cloth, i.e., the composite material 22 or 30, can be transformed into a spatial form, as is schematically indicated in Fig. 18.

As has already been shown by Fig. 14, the strictly local deformation of the composite material 30 in Fig. 18 may be accomplished with local variations of the shrinking capability of the involved layers 16 and 17. As a result of this, it is possible to also accomplish a spatially differently oriented deformation of the composite material 30, as is shown by Fig. 19. There, reference sign 39 identifies the zone of layers 16 and 17, respectively, in which zone the shrinkage potential locally exceeds the shrinkage potential of the respectively other layer. In this manner, concave shapes are formed, i.e., alternately on the upper side and on the lower side of the composite material 30. The same applies to the convex shapes.

Considering the presented embodiments, numerous modifications are possible. For example, the shrinking capability of the composite material 30 may be a function of direction, i.e. anisotropic. The dependence on direction may vary locally. Fig. 20 shows, in an exemplary manner, a first zone 40 exhibiting high longitudinal shrinkage capability and low transverse shrinkage capability. In addition, there is a second zone 41 exhibiting low longitudinal shrinkage capability but high transverse shrinkage capability. Laterally, in the immediate vicinity thereto, there is a third zone 42 exhibiting large longitudinal shrinking capability and small transverse shrinking capability. Appropriately configured zones 40, 41, 42 may repeat diagonally offset in longitudinal direction of the web.

Such zones 40, 41, 42 that exhibit anisotropic shrinkage behavior, i.e., a shrinkage potential that is a function of direction, may be arranged in any desired pattern over the surface of the composite material 30. Such zones can be achieved, e.g., in that prefabricated layer sections are incorporated or also in that the fibers of the respective layers 16 and/or 17 display - at relevant points of the zones 40, 41, 42 - a preferred orientation in longitudinal or transverse direction of the web 30 or also in a diagonal direction. If, in a layer 16, 17 of a fiber mixture, the shrinkage potential is determined by the content of shrinkable fibers, the shrinkage potential can be locally varied in that the fiber content is locally varied, e.g., during the manufacture of a random-fiber non-woven fabric. Referring to woven or knit (warp knit) layers, it is possible to use a two-filament or multifilament structure with two or more filaments exhibiting different shrinking capabilities. If desired, it is possible to locally vary the shrinkage potential by selecting a suitable weave (woven) or a suitable pattern (knit, warp knit).

For the production of spatial textile articles 12 a base material with two or more layers is used, the two layers 16, 17 of said material exhibiting at least locally different shrinkage potentials. Then, during a suitable process, the shrinkage potential is released fully or in part due to thermal action, other physical action or chemical action, thus causing a spatial arching of the starting material and, in doing so, resulting in the manufacture of the desired textile article 12.

### List of Reference Signs:

- 10: Brassiere
- 11: Strap
- 12: Three-dimensional textile article
- 13, 14: Cups
- X, Y: Directions of the area
- 15: Textile material
- 16: Connecting point
- 17: Second layer
- 18: Boundary surface
- 19: Fibers of the first layer 16
- 20: Fibers of the second layer 17
- 21: Textile starting material
- 22: Composite material
- 23: Upper mold half
- 24: Lower mold half
- 25: Upper thread
- 26: Lower thread
- 27: Planar structure
- 28: Layer
- 29: Surface layer
- 30: Composite material
- 31: Zones with reduced shrinkage potential
- 32: Region
- 33: Composite object
- 34: Plastic material
- 35: Felting needle
- 36: Needle board
- 37: Random-fiber non-woven fabric
- 38: Random-fiber non-woven fabric
- 39: Zone
- 40: First zone
- 41: Second Zone
- 42: Third Zone
- P1: First shrinkage potential
- P2: Second shrinkage potential

## Claims

1. Method for the manufacture of a three-dimensional textile article (12), comprising the following steps:
Providing a first textile layer (16) exhibiting a first shrinkage potential (P1),
Arranging a second textile layer (17) exhibiting a second shrinkage potential, said second shrinkage potential differing at least locally from the shrinkage potential (P2) of the first layer,
Mechanically connecting the two layers (16, 17), and
Initiating the shrinking process.

2. Method as in Claim 1, **characterized in that** the shrinkage potential (P1, P2) is uniform within the first layer (16) and/or within the second layer (17), respectively.

3. Method as in Claim 1, **characterized in that** the shrinkage potential (P1, P2) of the first layer (16) and/or the second layer (17) varies within the respective layer(16, 17).

4. Method as in Claim 1, **characterized in that** an additional textile layer (28) is arranged between the first and the second textile layers (16, 17).

5. Method as in Claim 1, **characterized in that** an additional textile layer (29) is arranged on the first and/or the second textile layers (16, 17).

6. Method as in Claim 1, **characterized in that** die mechanical connection between the layers (16, 17) is accomplished by a bonding process during which the fibers (19) of one of the layers (16) are partially transferred into the other layer (17).

7. Method as in Claim 6, **characterized in that** the bonding of the layers (16, 17) is accomplished with needles (35) or fluid jets and/or by a sewing process or a stitch-knitting process.

8. Method as in Claim 1, **characterized in that** the shrinking process is accomplished by physical and/or chemical action.

9. Method as in Claim 1, **characterized in that** the shrinking process is restricted to selected zones (31, 32) of the layers (16, 17) or is varied in the zones (31, 32).

10. Method as in Claim 1, **characterized in that** at least one of the layers (16, 17) is a non-woven fabric, a knit, a warp knit or a woven fabric.

11. Method as in Claim 1, **characterized in that** the shrinking process is performed inside a support mold (23, 24).

12. Shaped textile element (12) comprising
a first textile layer (16) exhibiting first shrinkage properties,
a second textile layer (17) that is arranged on the first textile layer (16) and exhibits second shrinkage properties, said second shrinkage properties differing at least locally from the shrinkage properties of the first layer (16),
whereby the two layers (16, 17) are mechanically connected with each other and have an arched form.

13. Shaped textile element as in Claim 12, **characterized in that** the two layers (16, 17) are mechanically connected with at least one additional layer (28, 29).

14. Shaped textile element as in Claim 12, **characterized in that** the layers (16, 17) that are connected with each other form an open-pore flexible body.

15. Shaped textile element as in Claim 12, **characterized in that** the shaped textile element (12) is embedded in a plastic material matrix (34).
